(19) **Europäisches Patentamt / European Patent Office / Office européen des brevets**

(11) **EP 3 616 865 B1**

(12) **FASCICULE DE BREVET EUROPÉEN**

(45) Date de publication et mention
de la délivrance du brevet:
**29.03.2023 Bulletin 2023/13**

(21) Numéro de dépôt: **19193028.8**

(22) Date de dépôt: **22.08.2019**

(51) Classification Internationale des Brevets (IPC):
**B28B 1/00** *(2006.01)*   **B28B 3/20** *(2006.01)*
**B29C 64/209** *(2017.01)*   **B29C 64/336** *(2017.01)*
**B29C 64/118** *(2017.01)*

(52) Classification Coopérative des Brevets (CPC):
**B28B 1/001; B28B 3/20; B29C 64/118;**
**B29C 64/209; B29C 64/336**

(54) **DISPOSITIF ET PROCÉDÉ D'IMPRESSION TRIDIMENSIONNELLE DANS DU GEL**

VORRICHTUNG UND VERFAHREN ZUM DREIDIMENSIONALEN DRUCKEN IN GEL

DEVICE AND METHOD FOR THREE-DIMENSIONAL PRINTING IN GEL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.08.2018 FR 1857670**

(43) Date de publication de la demande:
**04.03.2020 Bulletin 2020/10**

(73) Titulaire: **SOLIQUID**
**75015 Paris (FR)**

(72) Inventeurs:
• **THOMAS, Amaury**
**75008 PARIS (FR)**
• **RHONÉ, Jim**
**75019 PARIS (FR)**

(74) Mandataire: **Casalonga**
**Casalonga & Partners**
**Bayerstraße 71/73**
**80335 München (DE)**

(56) Documents cités:
**JP-A- H01 225 512     JP-A- 2018 069 661
US-A1- 2018 057 682**

• **"Impression 3D d'objets mous dans un gel - tube ramifié", Youtube, 13 novembre 2015 (2015-11-13), page 1 pp., XP054979396, Extrait de l'Internet: URL:https://www.youtube.com/watch?v=EKtB4 2 SBTDw [extrait le 2019-05-17]**

Remarques:
Le dossier contient des informations techniques présentées postérieurement au dépôt de la demande et ne figurant pas dans le présent fascicule.

**Description**

La présente invention concerne un dispositif et un procédé d'impression tridimensionnelle dans du gel, et plus particulièrement d'impression tridimensionnelle dans du gel de produits comprenant du béton et/ou de produits en résine bi-composant.

L'impression tridimensionnelle, également connue sous la dénomination de fabrication additive, a connu récemment des développements significatifs. En particulier, l'impression tridimensionnelle par dépôt de matière consiste à déposer des couches successives d'un matériau les unes sur les autres pour réaliser un produit. Cette technique est particulièrement répandue car elle permet de réaliser des produits relativement rapidement et avec des matériaux de relativement bonne qualité. En outre, l'impression tridimensionnelle par dépôt de matière permet de réaliser des produits présentant des dimensions relativement importantes.

En particulier, des dispositifs d'impression tridimensionnelle par dépôt de matière peuvent être utilisés dans le domaine de la construction pour réaliser des produits de dimensions importantes à partir d'un matériau tel que du béton.

Cette technique n'apporte cependant pas pleine satisfaction dans la mesure où elle fait apparaître une contrainte de limitation de la complexité géométrique. La complexité géométrique est la possibilité de faire varier la typologie et la morphologie des produits imprimés dans toutes les directions et orientations tridimensionnelles. La technique d'impression tridimensionnelle par dépôt de matière est soumise aux lois physiques telles que la loi de la gravité et au temps de solidification du matériau d'impression. Par exemple, dans le cas de l'impression d'un produit en béton, cette technique ne permet pas l'impression de produits présentant un porte-à-faux et un fruit importants.

Pour pallier cet inconvénient, il a été proposé de réaliser un coffrage, généralement par impression tridimensionnelle. Un coffrage est une enceinte provisoire formant le négatif d'une forme souhaitée et destiné à maintenir en place le matériau coulé le temps que celui-ci devienne solide et autoportant. Bien qu'une telle solution permette de réaliser des géométries plus complexes, elle complexifie considérablement le procédé d'impression tridimensionnelle et augmente le coût d'impression associé.

Pour solutionner le problème de la limitation de la complexité géométrique, il a également été proposé des procédés d'impression tridimensionnelle dans du gel. Selon ce procédé, une seringue attachée à un bras robotisé injecte un matériau d'injection dans un gel. De la sorte, le matériau injecté est maintenu en suspension dans le gel jusqu'à impression complète du produit. Un tel procédé permet d'augmenter la complexité géométrique des produits réalisés.

Ce procédé n'est cependant pas pleinement satisfaisant. En effet, le procédé d'impression tridimensionnelle dans du gel est limité aux dimensions typiques d'une seringue, de sorte que les procédés existant actuellement ne permettent d'imprimer que des produits présentant des dimensions de l'ordre du centimètre ou du décimètre. Or, dans de nombreux domaines et en particulier dans le domaine de la construction, les produits réalisés doivent avoir des dimensions bien plus importantes, typiquement de l'ordre du mètre. Les procédés d'impression tridimensionnelle dans du gel sont donc inadaptés à un grand nombre d'applications, notamment à des applications dans le domaine de l'impression tridimensionnelle de produits en béton. L'état de la technique le plus proche et montré dans le document US 2018057682 qui divulgue un système utilisant du microgel organique comme matériau de support pour l'impression 3D de matériaux mous.

La présente invention, telle que définie par la revendication 1, a pour but de pallier aux inconvénients précités.

Plus particulièrement, l'invention vise à permettre la réalisation par impression tridimensionnelle dans du gel de produits présentant une plus grande variété de dimensions.

A cet effet, il est proposé un dispositif comprenant un bac rempli de gel, un bras robotisé, un moyen d'injection, le bras robotisé étant apte à modifier la position et/ou l'orientation du moyen d'injection par rapport au bac, le dispositif comportant un premier moyen d'alimentation.

Selon une de ses caractéristiques générales, ce dispositif comprend un raccord oblong présentant une première extrémité et une seconde extrémité, un premier moyen de liaison connectant mécaniquement la première extrémité avec le premier moyen d'alimentation et un second moyen de liaison connectant mécaniquement la seconde extrémité avec le moyen d'injection, la connexion mécanique mise en oeuvre par au moins l'un des premier et second moyens de liaison étant amovible.

Grâce à ce dispositif, et en particulier grâce au raccord mécaniquement connecté de la sorte, on peut réaliser par impression tridimensionnelle dans du gel des produits de plus grandes dimensions que des produits réalisés par des dispositifs d'impression tridimensionnelle dans du gel classiques.

En particulier, avoir les deux moyens de liaison amovibles est encore plus intéressant dans la mesure où, lorsque l'on souhaite utiliser le dispositif pour réaliser un produit de dimensions très différentes de celles d'un produit réalisé antérieurement, il n'est pas nécessaire de changer d'autres pièces que le raccord.

Le dispositif selon l'invention comprend en outre un raccord présentant une section transversale formant un ovoïde.

On améliore de la sorte l'hydrodynamisme du raccord dans le gel. Cela limite la déformation du raccord et du moyen d'injection, améliore la précision de l'injection du matériau et augmente la qualité de produit réalisé.

Dans un mode de réalisation, le premier moyen d'alimentation comprend un conduit présentant une forme de révolution, une vis sans fin contenue dans le conduit et un actionneur apte à entraîner le pivotement de la vis sans fin autour d'un axe de révolution du conduit.

La vis sans fin facilite l'injection du matériau. Cela est préférable car, le dispositif selon l'invention comprenant un raccord, il contient une quantité de matériau en cours d'injection plus importante que des dispositifs d'impression tridimensionnelle dans du gel classiques.

On peut en outre prévoir un moyen de chauffage d'une paroi externe du raccord et/ou du moyen d'injection.

Le moyen de chauffage permet de chauffer localement et sur une durée très courte le gel pour diminuer sa viscosité lors du passage du raccord et du moyen d'injection.

Avantageusement, le moyen d'injection comprend une buse comportant un orifice d'entrée, un orifice de sortie, un coude, une première portion s'étendant entre l'orifice d'entrée et le coude et une seconde portion s'étendant entre le coude et l'orifice de sortie, la première portion présentant une forme de révolution autour d'un premier axe parallèle à un axe longitudinal du raccord, la seconde portion présentant une forme de révolution autour d'un second axe, le second axe formant de préférence un angle compris entre 80 ° et 170 ° avec le premier axe.

La buse ainsi conçue permet d'orienter un cordon de matériau injecté dans le gel. On améliore ainsi la qualité du produit réalisé.

On peut en outre prévoir un moyen d'actionnement apte à entraîner en rotation le moyen d'injection par rapport au premier moyen d'alimentation autour d'une direction parallèle à un axe longitudinal du raccord, le moyen d'actionnement étant de préférence apte à entraîner en rotation le raccord par rapport au premier moyen d'alimentation.

Lorsqu'il est utilisé en combinaison avec la buse comprenant un coude, le moyen d'actionnement facilite la modification de l'orientation du cordon injecté. Lorsqu'il est utilisé en combinaison avec le raccord présentant une section en ovoïde, le moyen d'actionnement permet de modifier la direction de déplacement du moyen d'injection lors de l'injection en conservant un bon hydrodynamisme.

De préférence, le moyen d'actionnement est apte à entraîner en rotation le raccord par rapport au premier moyen d'alimentation.

Cette disposition du moyen d'actionnement simplifie la conception du dispositif en évitant notamment de prévoir que le moyen d'actionnement puisse être immergé dans le gel.

On peut en outre prévoir un circuit de circulation et un dispositif de traitement, le circuit de circulation connectant fluidiquement le dispositif de traitement et le bac.

On peut ainsi traiter le gel, de sorte à éviter le remplacement trop fréquent de celui-ci. Cela est tout particulièrement avantageux dans le cadre de l'invention dans la mesure où, les produits pouvant être de plus grandes dimensions, la quantité de gel utilisée par le dispositif est bien plus importante que dans le cas des dispositifs classiques.

On peut également prévoir un second moyen d'alimentation apte à alimenter le moyen d'injection avec un second matériau d'injection, le raccord comprenant un passage interne et un passage externe, le moyen d'injection délimitant un espace en communication fluidique avec le passage interne et le passage externe.

De la sorte, on peut réaliser un produit à deux composants, le mélange des deux composants ayant lieu immédiatement avant injection dans le gel.

De préférence, l'espace contient une paroi formant un hélicoïde.

Une telle paroi facilite le mélange des matériaux d'injection dans l'espace.

Dans un mode de réalisation, le second moyen d'alimentation comprend une première zone de liaison et une seconde zone de liaison, le premier moyen de liaison étant apte à connecter mécaniquement la première zone de liaison avec la première extrémité, le dispositif comprenant un troisième moyen de liaison apte à connecter mécaniquement le premier moyen d'alimentation avec la seconde zone de liaison, les connexions mécaniques mises en oeuvre par les premier et troisième moyens de liaison étant amovibles, le second moyen d'alimentation comprenant un canal s'étendant à partir de la seconde zone de liaison.

On obtient de la sorte un dispositif pouvant être utilisé à la fois pour réaliser un produit à un seul composant et un produit à deux composants et on facilite le travail d'un opérateur devant adapter le dispositif pour changer le nombre de composants du produit réalisé.

Dans un mode de réalisation, le premier matériau d'injection comprend du béton. On peut également prévoir que le second matériau d'injection, lorsqu'il existe, comprend un agent accélérateur de prise du béton.

On peut alors obtenir des produits à base de béton présentant des dimensions relativement importantes et une forte complexité géométrique, en particulier un porte-à-faux et/ou un fruit importants.

Selon un autre aspect, il est proposé un procédé d'impression tridimensionnelle au moyen du dispositif tel que défini précédemment, dans lequel le bac est rempli avec un gel, puis le premier moyen d'alimentation alimente le moyen d'injection avec un premier matériau d'injection, et un produit est formé par distribution du premier matériau d'injection dans le gel.

D'autres buts, caractéristiques et avantages de l'invention apparaîtront à la lecture de la description suivante, donnée uniquement à titre d'exemple non limitatif, et faite en référence aux dessins annexés sur lesquels :

-    la figure 1 est une représentation schématique d'un dispositif d'impression tridimensionnelle dans du gel selon un premier mode de réalisation de l'invention,
-    la figure 2 est une vue de face d'un extrudeur du dispositif de la figure 1,

- la figure 3 est une vue en coupe transversale d'un raccord de l'extrudeur de la figure 2,
- la figure 4 est une vue de face d'une buse pouvant équiper l'extrudeur de la figure 2,
- les figures 5A et 5B sont des vues schématiques en perspective d'un bac du dispositif de la figure 1,
- la figure 6 est une vue schématique d'un dispositif d'impression tridimensionnelle dans du gel selon un second mode de réalisation de l'invention, et
- la figure 7 est une vue de face d'un extrudeur du dispositif de la figure 6.

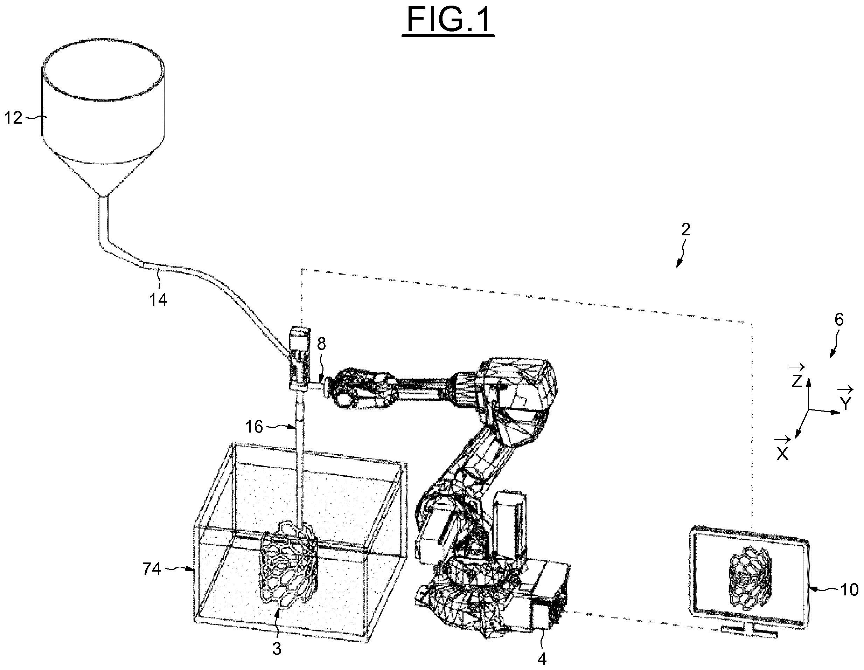

En référence à la figure 1, on a représenté schématiquement un dispositif d'impression tridimensionnelle dans du gel 2. Le dispositif 2 est destiné à produire par impression tridimensionnelle dans du gel un produit tel que le produit 3. Le dispositif 2 comporte notamment un bâti 4. On définit une base vectorielle 6 orthonormale directe attachée au bâti 4. La base vectorielle 6 est constituée d'un vecteur $\vec{x}$, d'un vecteur $\vec{y}$ et d'un vecteur $\vec{z}$. Dans la présente demande, les termes « inférieur » et « supérieur » seront compris comme se référant à la direction et au sens du vecteur $\vec{z}$ lorsque le bâti est normalement agencé sur une surface plane et horizontale, c'est-à-dire lorsque le vecteur $\vec{z}$ est vertical et dirigé vers le haut.

Le dispositif 2 comporte un bras robotisé 8. En l'espèce, le bras robotisé 8 est actionné par un robot six axes qui constitue un dispositif connu en soi. De ce fait, le bras robotisé 8 est mécaniquement connecté avec le bâti 4 par une liaison présentant trois degrés de liberté en translation et trois degrés de liberté en rotation. On définit une base vectorielle 9 orthonormale directe attachée au bras robotisé 8. La base vectorielle 9 est constituée d'un vecteur $\vec{u}$, d'un vecteur $\vec{v}$ et d'un vecteur $\vec{w}$. La base vectorielle 9 est confondue avec la base vectorielle 6 lorsque le bras robotisé est disposé dans sa position de repos telle qu'illustrée sur la figure 1. De ce fait, la base vectorielle 9 n'est pas représentée sur cette figure.

Le dispositif 2 comporte un ordinateur 10. L'ordinateur 10 est en liaison d'informations avec le robot actionnant le bras robotisé 8.

Le dispositif 2 comporte une cuve de stockage et de malaxage 12. La cuve 12 contient un matériau d'injection. Dans le premier mode de réalisation, le matériau d'injection contenu dans la cuve 12 est un polymère. La cuve 12 est en connexion fluidique avec un tuyau 14.

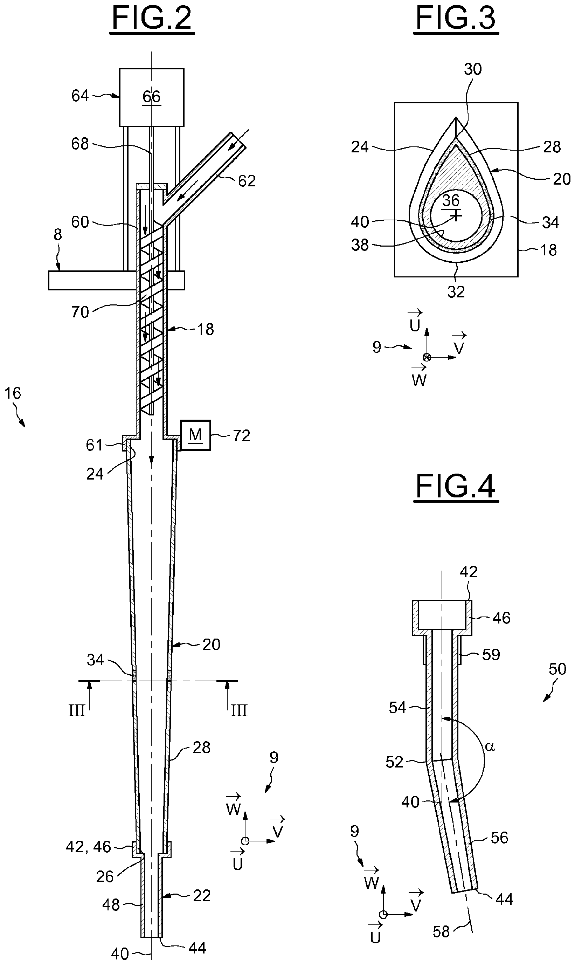

En référence aux figures 1 et 2, le dispositif 2 comporte un extrudeur 16. L'extrudeur 16 comprend un boîtier d'alimentation 18, un raccord 20 et une buse 22 (référencés sur la figure 2).

Le raccord 20 est oblong et présente une direction longitudinale parallèle au vecteur $\vec{w}$. Dans la présente demande, sauf lorsqu'il en sera indiqué autrement, les termes « longitudinal » et « transversal » seront compris comme se référant à la direction longitudinale du raccord 20. De même, sauf lorsqu'il en sera indiqué autrement, l'expression « coupe transversale » désigne une coupe par un plan de coupe normal à la direction longitudinale du raccord 20. Le raccord 20 s'étend entre une extrémité longitudinale supérieure 24 et une extrémité longitudinale inférieure 26. Le raccord 20 est réalisé en un matériau rigide, en l'espèce en acier.

Le raccord 20 est extérieurement délimité par une surface 28 visible en coupe transversale sur la figure 3. La section en coupe transversale de la surface 28 est plus large à mesure que l'on se rapproche de l'extrémité 24 et que l'on s'éloigne de l'extrémité 26. En fait, quel que soit un plan de coupe $P(z)$ transversal du raccord 20 au niveau d'une altitude z donnée, la section de la surface 28 par le plan $P(z)$ est une homothétie de la section par le plan de coupe $P(z_0)$ transversal au niveau de l'extrémité 26, le coefficient d'homothétie c étant une fonction du décalage selon la direction du vecteur $\vec{w}$ entre les plans $P(z)$ et $P(z_0)$ :

$$c = f(z - z_0)$$

Par exemple, la fonction f est la fonction constante égale à 1.

La section en coupe transversale de la surface 28 forme un ovoïde. Plus particulièrement, dans les modes de réalisation illustrés, la section en coupe transversale de la surface 28 forme un ovoïde de Kepler. La surface 28 présente de ce fait une queue 30 et un bord d'attaque 32. Le bord d'attaque 32 est relativement situé au niveau d'une extrémité d'origine du vecteur $\vec{u}$ et la queue 30 est relativement située au niveau d'une extrémité d'arrivée du vecteur $\vec{u}$. De cette manière, le raccord 20 présente un hydrodynamisme amélioré lorsqu'il se déplace dans un fluide tel que du gel selon la direction du vecteur $\vec{u}$ et dans le sens opposé au sens du vecteur $\vec{u}$. Bien que, dans l'exemple illustré, la coupe transversale de la surface 28 forme un ovoïde de Kepler, on peut bien entendu sans sortir du cadre de l'invention envisager une coupe transversale d'une autre forme, par exemple une forme d'ovoïde au profil de courbe de Rosillo.

Toujours en référence à la figure 3, le raccord 20 comprend une résistance électrique 34. La résistance 34 est située à proximité de la surface 28. De cette manière, lorsqu'elle est alimentée en énergie électrique, la résistance 34 fournit de la chaleur à la surface 28.

Le raccord 20 comporte un conduit 36 délimité par une paroi intérieure 38. Le conduit 36 est prévu pour permettre le passage du polymère provenant du boîtier 18. Le conduit 36 s'étend longitudinalement entre les extrémités 24 et 26. Plus précisément, le conduit 36 présente une forme de révolution autour d'un axe de révolution 40. L'axe 40 est parallèle au vecteur $\vec{w}$. Dans la présente demande, sauf lorsqu'il en sera indiqué autrement, les termes « axial », « axialement », « radial » et « radialement » seront compris comme se référant à l'axe 40. De même, sauf indication contraire, l'expression « coupe axiale » sera comprise comme désignant une coupe par un plan de coupe normal à l'axe 40.

La section en coupe axiale du conduit 36 forme un cercle dont le diamètre va en augmentant à mesure que l'on s'éloigne de l'extrémité 26 et que l'on se rapproche de l'extrémité 24. De ce fait, la surface intérieure 38 forme un tronc de cône autour de l'axe 40.

De nouveau en référence à la figure 2, la buse 22 présente une forme de révolution autour de l'axe 40. La buse 22 s'étend axialement entre une extrémité supérieure 42 et une extrémité inférieure 44. Les extrémités 42 et 44 forment deux orifices circulaires normaux au vecteur $\vec{w}$ et permettant le passage du polymère provenant du conduit 36.

Au niveau de l'extrémité 42, la buse 22 présente une bague de serrage 46. La bague 46 peut enserrer l'extrémité 26. De la sorte, il peut être réalisé de manière amovible une connexion mécanique à encastrement entre la buse 22 et le raccord 20. Entre la bague 46 et l'extrémité 44, la buse 22 est radialement délimitée à l'extérieur par une surface 48 tronconique autour de l'axe 40.

En référence à la figure 4, on a représenté une vue de face d'une buse 50 pouvant remplacer la buse 22 de l'extrudeur 16. Les éléments identiques portent les mêmes références.

La buse 50 présente un coude 52 situé verticalement entre une portion supérieure 54 une portion inférieure 56. La portion 54 est tronconique autour de l'axe 40. La portion 56 est tronconique autour d'un axe de révolution 58. L'angle $\alpha$ formé entre les axes 40 et 58 est de préférence compris entre 80° et 170°.

L'invention ne se limite bien entendu pas aux formes cylindriques ou tronconiques du conduit 36 et des buses 22 et 52. En particulier, on pourra prévoir une géométrie différente du conduit 36 et une géométrie différente d'une surface radiale intérieure des buses 22 ou 52, de sorte à permettre une modification d'une dimension de l'orifice défini par l'extrémité inférieure 44 et ainsi à permettre la variation d'une dimension d'un cordon de matériau injecté. Bien que, dans l'exemple illustré, la surface formée par l'extrémité 44 forme un angle de 90 ° avec le vecteur $\vec{w}$, il est possible, sans sortir du cadre de l'invention, d'envisager un angle entre la surface formée par l'extrémité 44 et le vecteur $\vec{w}$ différent de 90°.

La buse 50 comporte une résistance électrique 59. Comme cela est visible sur la figure 4, la résistance 59 est disposée au niveau d'une surface délimitant radialement à l'extérieur la portion 54. Toutefois, on peut bien entendu sans sortir du cadre de l'invention envisager de placer la résistance 59 au niveau de la portion 56. De la sorte, la résistance 59 permet de chauffer la surface radiale extérieure de la buse 50.

Le boîtier 18 a volontairement été omis sur la figure 2 pour une meilleure clarté de cette figure. Le boîtier 18 comprend un tuyau 60 en communication fluidique avec un embout 62. Le boîtier 18 et le tuyau 60 sont fixés au bras robotisé 8. L'embout 62 peut être connecté fluidiquement avec le tuyau 14. Le tube 60 est cylindrique à section en coupe axiale circulaire autour de l'axe 40. De la sorte, le tuyau 60 est disposé dans le prolongement axial du conduit 36. Le tube 60 présente un alésage traversant 61 formant une bague de serrage pouvant recevoir l'extrémité 24 du raccord 20. Plus précisément, l'alésage 61 réalise une liaison pivot autour de l'axe 40 entre le raccord 20 et le boitier 18.

Comme cela sera expliqué par la suite, les bagues 46 et 61 permettent de lier mécaniquement et de manière amovible le raccord 20 avec la buse 22 ou 50 et avec le boîtier 18, respectivement. On peut toutefois sans sortir du cadre de l'invention envisager un autre moyen de liaison comme, par exemple, un filetage et un taraudage.

Le boîtier 18 comporte un moteur électrique 64 comprenant un carter 66 et un arbre 68. Le carter 66 est fixé au bras robotisé 8. L'arbre 68 est cylindrique à section en coupe axiale circulaire autour de l'axe 40. L'arbre 68 est entraîné en rotation par rapport au carter autour de l'axe 40. Le moteur 64 est en liaison d'information avec l'ordinateur 10.

Le boîtier 18 comporte une vis sans fin 70 contenue dans le tuyau 60 et solidaire de l'arbre 68. Plus précisément, la vis sans fin 70 s'étend radialement sur toute la section en coupe axiale du tuyau 60.

Le boîtier 18 comporte un moteur électrique 72 pas à pas. Le moteur 72 présente un carter (non référencé) solidaire du boîtier 18 et une pièce mobile (non référencée). La pièce mobile est par exemple un pignon coopérant avec l'extrémité 24 du raccord 20. De cette manière, l'ensemble solidaire constitué par le raccord 20 et la buse 22 ou 50 peut être entraîné en rotation autour de l'axe 40 par rapport au boîtier 18. Le moteur électrique 72 est en liaison d'informations avec l'ordinateur 10.

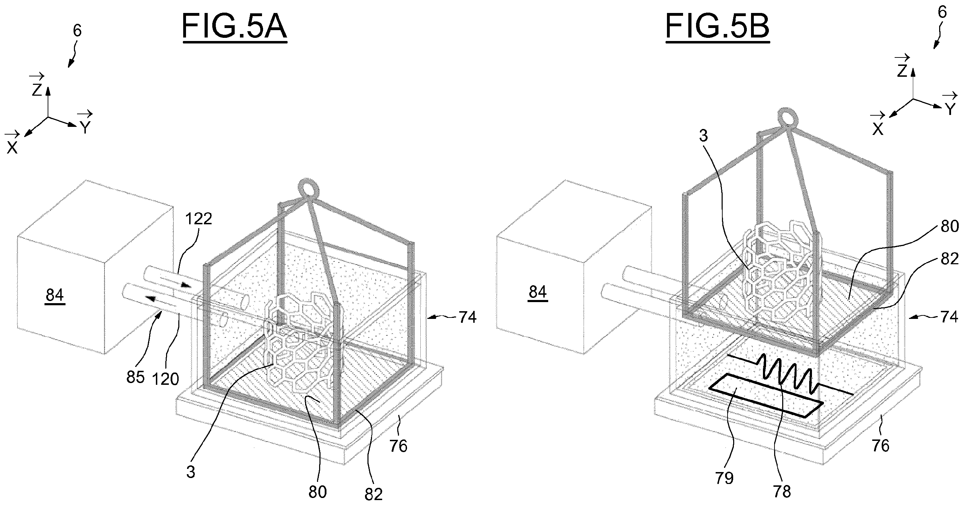

En référence aux figures 1, 5A et 5B, le dispositif 2 comporte un bac 74. Le bac 74 est destiné à recevoir un fluide tel qu'un gel classiquement utilisé dans l'impression tridimensionnelle dans du gel. Dans l'exemple illustré, le bac 74 forme un parallélépipède rectangle présentant une longueur L74 selon la direction du vecteur $\vec{y}$, une largeur $l_{74}$ selon la direction du vecteur $\vec{x}$ et une hauteur $h_{74}$ selon la direction du vecteur $\vec{z}$. Une face supérieure du bac 74 est ouverte de sorte à permettre le passage de l'extrudeur 16. Quelle que soit une altitude z, on note $A_{74}(z)$ l'aire de la section en coupe dans le plan normal au vecteur $\vec{z}$ du bac 74. Dans l'exemple illustré, $A_{74}(z)$ est constant quel que soit z compris entre $z_0$ et $z_1 = z_0 + h_{74}$, où $z_0$ et $z_4$ sont les altitudes respectives des faces inférieure et supérieure du bac 74 :

$$A_{74}(z) = \overline{L}_{74} * l_{74}$$

Bien entendu, l'invention ne se limite pas à un bac formant un parallélépipède rectangle mais peut concerner toute autre forme de bac. On note $A_{74}$ la moyenne de l'aire des différentes sections dans le plan perpendiculaire au vecteur $\vec{z}$ :

$$A_{74} = \frac{1}{(z_1 - z_0)} * \int_{z_0}^{z_1} A_{74}(z)\,dz$$

Afin de permettre la réalisation de produits de dimensions suffisantes, la moyenne $A_{74}$ est supérieure à 0,09 m², et de préférence comprise entre 0,25 m² et 2 m², et la hauteur $h_{74}$ est supérieure à 0,3 m, et de préférence comprise entre 0,5 m et 2 m.

En référence aux figures 5A et 5B, le bac 74 est posé sur un socle 76. Le socle 76 peut émettre et transmettre des vibrations au bac 74. En outre, le socle 76 comprend une résistance électrique 78. La résistance 78 a volontairement été omise sur la figure 5A pour permettre une meilleure clarté de cette figure. La résistance électrique 78 est capable de fournir de la chaleur à la paroi supérieure de la face inférieure du bac 74. De la sorte, la résistance 78 peut transmettre de la chaleur à un fluide contenu dans le bac 74. On peut bien entendu sans sortir du cadre de l'invention envisager de disposer la résistance 78 à un emplacement différent, par exemple dans l'une des faces inférieure et/ou latérales du bac 74.

Le socle 76 comprend en outre un dispositif de refroidissement 79, en l'espèce un circuit de refroidissement contenant un liquide de refroidissement (non représenté). Le dispositif 79 a été omis sur la figure 5A pour permettre une meilleure clarté de cette figure. Ainsi, la combinaison de la résistance 78 et du dispositif 79 permet d'augmenter et de diminuer la température du gel contenu dans le bac 74.

Dans les modes de réalisation illustrés, l'ordinateur 10 comprend un estimateur de la température du fluide contenu dans le bac 74 et un régulateur de cette température. Le régulateur est doté des moyens matériels et logiciels pour recueillir une température de consigne, pour recueillir la température estimée par l'estimateur, pour calculer un écart entre la température de consigne et la température estimée, pour établir un signal de correction et pour transmettre le signal de correction à la résistance 78 afin de réguler la température. Bien entendu, l'invention ne se limite pas à un estimateur pour déterminer la température du fluide contenu dans le bac 74, un capteur de température pouvant par exemple être utilisé.

Le dispositif 2 comprend un plateau 80. Dans les modes de réalisation illustrés, le plateau 80 est rectangulaire de longueur et de largeur très légèrement inférieures aux dimensions $L_{74}$ et $l_{74}$ respectives. Le plateau 80 peut être reçu dans le bac 74 et peut coulisser entre les altitudes $z_0$ et $z_1$. Le plateau 80 se laisse traverser par le fluide contenu dans le bac 74 et est apte à supporter le produit 3. Le plateau 80 est solidaire d'une structure de préhension 82.

Le dispositif 2 comporte en outre un dispositif de traitement 84. En l'espèce, le dispositif 84 peut filtrer et malaxer le fluide contenu dans le bac 74. A cet effet, le dispositif 84 est fluidiquement connecté au bac 74 grâce à un circuit de circulation 85 comprenant deux conduits 120 et 122. Les conduits 120 et 122 sont en communication fluidique avec le bac 74 et avec le dispositif 84. Plus particulièrement, le conduit 120 transporte le fluide usé provenant du bac 74 vers le dispositif 84 tandis que le conduit 122 transporte le fluide filtré et malaxé provenant du dispositif 84 vers le bac 74.

Au vu de ce qui précède, un opérateur met en oeuvre les actions suivantes pour réaliser un produit au moyen du dispositif 2.

À l'état initial, la cuve 12 est remplie avec du polymère et le bac 74 est rempli avec un gel adapté pour réaliser une impression tridimensionnelle dans du gel.

L'opérateur dispose d'abord le plateau 80 au niveau de la face inférieure du bac 74, comme cela est représenté sur la figure 5A. A cet effet, l'opérateur peut utiliser un robot ou une grue de levage. Ensuite, l'opérateur insère l'extrémité 24 du raccord 20 dans la bague formée par l'alésage 61. Le raccord 20 est alors relié de manière amovible au boîtier 18 par une liaison pivot autour de l'axe 40. En fonction des dimensions du produit 3 qu'il souhaite obtenir, l'opérateur pourra choisir un raccord 20 différent, notamment un raccord 20 présentant une longueur différente ou un raccord 20 présentant une forme de conduit 36 différente. Ensuite, l'opérateur insère l'extrémité 26 du raccord 20 dans la bague 46 de la buse 22 pour relier de manière amovible le raccord 20 avec la buse 22 par une liaison d'encastrement.

Ensuite, l'opérateur utilise l'ordinateur 10 pour contrôler, simultanément, le déplacement du bras robotisé 8, le moteur électrique 64, le moteur électrique 72 et les résistances 34 et 78. En pilotant le moteur électrique 64, l'opérateur contrôle l'alimentation en polymère par le boîtier 18. En pilotant le déplacement du bras robotisé 8, l'opérateur contrôle la position et l'orientation de la buse 22. En pilotant le moteur électrique 72 et les résistances 34 et 78, l'opérateur facilite le déplacement de l'extrudeur 16 dans le gel. L'ordinateur 10 pilote le moteur électrique 72 de telle sorte que le bord d'attaque 32 soit en avant du mouvement de déplacement du raccord 20 et que la queue 30 soit en arrière du mouvement de déplacement du raccord 20. Les résistances 34 et 78 augmentent la température du gel contenu dans le bac 74, diminuant ainsi sa viscosité.

Si l'opérateur souhaite modifier les conditions d'injection du polymère dans le gel, il peut désolidariser la buse 22 du raccord 20 et la remplacer par la buse 50. L'opérateur fixe alors la buse 50 de telle sorte que la portion 56 s'étende axialement sous la queue 30. De la sorte, grâce au moteur électrique 72 piloté par l'ordinateur 10, l'orifice de sortie formé par l'extrémité 44 de la buse 50 est situé en arrière du mouvement de déplacement de la buse 50. En outre, l'ordinateur 10 pilote la résistance 59 de manière à faciliter encore davantage le déplacement de l'extrudeur 16.

Lorsque l'injection de polymère dans le gel est terminée, l'opérateur extrait l'extrudeur 16 du bac 74, arrête l'alimentation électrique des résistances 34, 59 et 78 et soulève le plateau 80 au moyen de la structure 82. Pour faciliter le déplacement du plateau 80, l'opérateur peut faire vibrer le bac 74 au moyen du socle 76. Lorsque le plateau 80 est situé au niveau d'une face supérieure du bac 74, c'est-à-dire dans sa position telle qu'illustrée sur la figure 5B, le produit 3 peut être récupéré et le procédé est terminé.

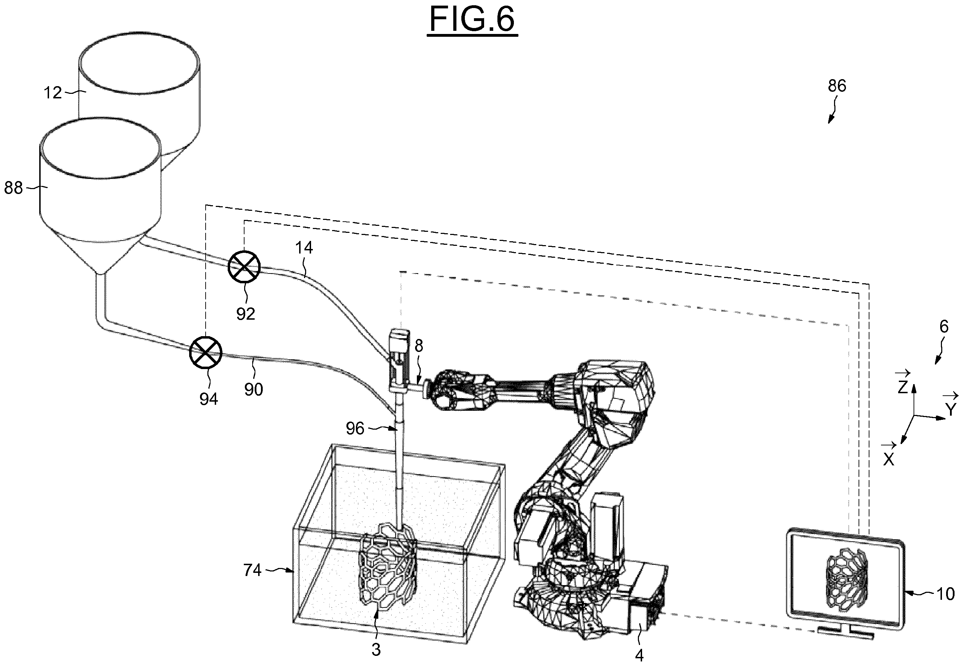

La figure 6 représente schématiquement un dispositif 86 selon un second mode de réalisation de l'invention. Les éléments identiques portent les mêmes références. Dans le second mode de réalisation, le dispositif 86 est adapté pour réaliser un produit 3 à partir de deux matériaux d'injection distincts.

Le dispositif 86 diffère du dispositif 2 en ce qu'il comprend une autre cuve de stockage et de malaxage 88. Dans le second mode de réalisation, la cuve 12 contient du béton alors que la cuve 88 contient un agent accélérateur de prise du béton. L'invention ne se limite toutefois pas au choix de ces matériaux d'injection, les cuves 12 et 88 pouvant par exemple contenir des matériaux d'injection adaptés pour réaliser un produit 3 en résine bi-composant. La cuve 88 est en connexion fluidique avec un tuyau 90 similaire au tuyau 14.

Le dispositif 86 diffère encore du dispositif 2 en ce qu'il comprend deux pompes 92 et 94 respectivement montées sur les tuyaux 14 et 90. Les pompes 92 et 94 sont en connexion d'information avec l'ordinateur 10.

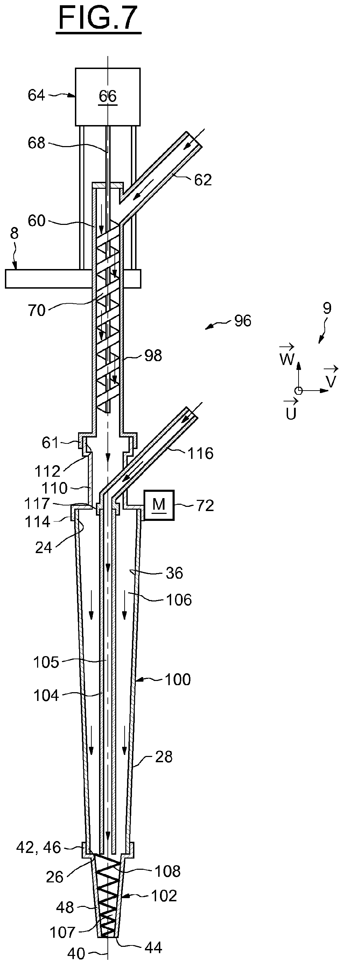

Le dispositif 86 diffère encore du dispositif 2 en ce qu'il comprend un extrudeur 96. L'extrudeur 96 comporte un boîtier 98, un tube 110, un raccord 100 et une buse 102. Le tube 110, le raccord 100 et la buse 102 sont représentés en détail sur la figure 7.

Le raccord 100 comprend une paroi interne 104 délimitant radialement le conduit 36 en un conduit interne 105 et un conduit externe 106. La paroi 104 s'étend sur toute la longueur du raccord 100. On peut bien entendu sans sortir du cadre de l'invention envisager un agencement relatif différent des conduits 105 et 106. Avantageusement, les conduits 105 et 106 sont dans le volume intérieur délimité par le raccord 100. De préférence, l'axe du conduit 105 est confondu avec l'axe 40.

La buse 102 comprend un espace 107 recevant une paroi 108 formant un hélicoïde autour de l'axe 40. Un hélicoïde est une surface engendrée par une demi-droite $[OM_0]$ dont l'origine O décrit une droite $(\Delta)$ et dont le point fixe $M_0$ décrit une hélice $(H_0)$ d'axe $(\Delta)$, $[OM_0]$ restant orthogonale à $(\Delta)$. La paroi 108 s'étend depuis l'extrémité supérieure 42 jusqu'à l'extrémité inférieure 44.

Le tube 110 est cylindrique à base circulaire autour de l'axe 40. Le tube 110 s'étend axialement entre une extrémité supérieure 112 et une extrémité inférieure 114. L'extrémité 114 a la forme d'une bague de serrage similaire à la bague formée par l'alésage 61. L'extrémité 112 présente une forme extérieure similaire à celle de l'extrémité supérieure 24 du raccord 100. De la sorte, le tube 110 peut être fixé de manière amovible au tube 60 par serrage de la bague 112 dans la bague 61. De même, le raccord 100 peut être fixé de manière amovible au tube 110 par serrage de l'extrémité 24 dans la bague 114.

Le tube 110 comprend un tuyau 116 formant un canal en connexion fluidique avec le conduit interne 105. Le tuyau 116 est destiné à être raccordé avec le tuyau 90. Le tuyau 116 comporte une extrémité inférieure 117 formant une bague de serrage. L'extrémité 117 permet la fixation amovible de la paroi 104 avec le tuyau 116 par serrage de l'extrémité supérieure de la paroi 104 dans la bague formée par l'extrémité 117. Avoir l'axe du conduit 105 confondu avec l'axe 40 permet la rotation du raccord 100 en gardant fixes le tube 110 et le tuyau 116.

Pour utiliser le dispositif 86, un opérateur contrôle, en plus des actionneurs déjà pilotés dans le premier mode de réalisation, les débits réalisés par les pompes 92 et 94. Ce faisant, l'opérateur peut contrôler les proportions du mélange de béton et d'agent d'accélération injectées dans le gel. Plus particulièrement, le béton fourni par la cuve 12 est pompé par la pompe 92 puis entraîné par la vis sans fin 70 dans l'extrudeur 96. Le béton s'écoule dans le tuyau 60, puis dans le tuyau 110, puis dans le conduit 106 et dans l'espace 107. L'agent d'accélération est pompé par la pompe 94, fourni au tuyau 116 du tube 110, puis circule dans le conduit 105 et débouche dans l'espace 107. La paroi 108 permet de mélanger le béton et l'agent d'accélération immédiatement avant leur injection dans le gel. L'utilisation combinée d'une pompe et d'une vis sans fin est avantageuse pour entraîner le déplacement d'un matériau d'injection à forte viscosité tel que du béton.

Au vu de ce qui précède, l'invention permet de réaliser un produit par impression tridimensionnelle dans un gel sans imposer de limitation des dimensions du produit. Le champ d'application de l'impression tridimensionnelle dans un gel est alors élargi, en particulier dans le domaine de l'impression tridimensionnelle pour la construction.

**Revendications**

1. Dispositif (2, 86) comprenant un bac (74) rempli de gel, un bras robotisé (8), un moyen d'injection (22, 50, 102), le bras robotisé (8) étant apte à modifier la position et/ou l'orientation du moyen d'injection (22, 50, 102) par rapport au bac (74), le dispositif (2, 86) comportant un premier moyen d'alimentation (60) comprenant un raccord (20, 100) oblong présentant une première extrémité (26) et une seconde extrémité (24), un premier moyen de liaison connectant mécaniquement la première extrémité (26) avec le premier moyen d'alimentation (60) et un second moyen de liaison connectant mécaniquement la seconde extrémité (24) avec le moyen d'injection (22, 50, 102), la connexion mécanique mise en oeuvre par au moins l'un des premier et second moyens de liaison étant amovible, **caractérisé en ce que** le le raccord (20, 100) présente une section transversale formant un ovoïde.

2. Dispositif (2, 86) selon la revendication 1, dans lequel le premier moyen d'alimentation comprend un conduit (60), une vis sans fin (70) contenue dans le conduit (60) et un actionneur (64) apte à entraîner le pivotement de la vis sans fin (70).

3. Dispositif (2, 86) selon la revendication 1 ou 2, comprenant un moyen de chauffage (34, 59) d'une paroi externe du raccord (20, 100) et/ou du moyen d'injection (50).

4. Dispositif (2, 86) selon l'une quelconque des revendications 1 à 3, dans lequel le moyen d'injection comprend une buse (50) comportant un orifice d'entrée (42), un orifice de sortie (44), un coude (52), une première portion (54) s'étendant entre l'orifice d'entrée (42) et le coude (52) et une seconde portion (56) s'étendant entre le coude (52) et l'orifice de sortie (44), la première portion (54) présentant une forme de révolution autour d'un premier axe (40) parallèle à un axe longitudinal du raccord (20, 100), la seconde portion (56) présentant une forme de révolution autour d'un second axe (58), le second axe (58) formant de préférence un angle ($\alpha$) compris entre 80 ° et 170 ° avec le premier axe (54).

5. Dispositif (2, 86) selon la revendication 3 ou 4, comprenant un moyen d'actionnement (72) apte à entraîner en rotation le moyen d'injection (22, 50, 102) par rapport au premier moyen d'alimentation (60) autour d'une direction ($\vec{w}$) parallèle à un axe longitudinal du raccord (20), le moyen d'actionnement (72) étant de préférence apte à entraîner en rotation le raccord (20, 100) par rapport au premier moyen d'alimentation (60).

6. Dispositif (2, 86) selon l'une quelconque des revendications 1 à 5, comprenant un circuit de circulation (85) et un dispositif de traitement (84), le circuit de circulation (85) connectant fluidiquement le dispositif de traitement (84) et le bac (74).

7. Dispositif (86) selon l'une quelconque des revendications 1 à 6, comprenant un second moyen d'alimentation (110) apte à alimenter le moyen d'injection (22, 50, 102) avec un second matériau d'injection, le raccord (100) comprenant un passage interne (105) et un passage externe (106), le moyen d'injection (22, 50, 102) délimitant un espace (107) en communication fluidique avec le passage interne (105) et le passage externe (106), l'espace (107) contenant de préférence une paroi (108) formant un hélicoïde.

8. Dispositif (86) selon la revendication 7, dans lequel le second moyen d'alimentation (110) comprend une première zone de liaison (114) et une seconde zone de liaison (112), le premier moyen de liaison étant apte à connecter mécaniquement la première zone de liaison (114) avec la première extrémité (26), le dispositif (86) comprenant un troisième moyen de liaison apte à connecter mécaniquement le premier moyen d'alimentation (60) avec la seconde zone de liaison (112), les connexions mécaniques mises en oeuvre par les premier et troisième moyens de liaison étant amovibles, le second moyen d'alimentation (110) comprenant un canal (116) s'étendant à partir de la première zone de liaison (114).

9. Dispositif (86) selon l'une quelconque des revendications 1 à 8, dans lequel le premier matériau d'injection comprend du béton.

10. Procédé d'impression tridimensionnelle au moyen du dispositif (2, 86) selon l'une quelconque des revendications 1 à 9, dans lequel le bac (74) est rempli avec un gel, puis le premier moyen d'alimentation (60) alimente le moyen d'injection (22, 50, 102) avec un premier matériau d'injection, et un produit (3) est formé par distribution du premier matériau d'injection dans le gel.

**Patentansprüche**

1. Vorrichtung (2, 86), umfassend einen mit Gel gefüllten Tank (74), einen Roboterarm (8), eine Injektionseinrichtung (22, 50, 102), wobei der Roboterarm (8) in der Lage ist, die Position und/oder die Ausrichtung der Injektionseinrichtung (22, 50, 102) in Bezug auf den Behälter (74) zu modifizieren, wobei die Vorrichtung (2, 86) eine erste Zufuhreinrichtung (60), die ein längliches Verbindungsstück (20, 100) mit einem ersten Ende (26) und einem zweiten Ende (24), eine erste Verbindungseinrichtung, die das erste Ende (26) mechanisch mit der ersten Zufuhreinrichtung (60) verbindet, und eine zweite Verbindungseinrichtung enthält, die das zweite Ende (24) mechanisch mit der Injektionseinrichtung (22, 50, 102) verbindet, wobei die mechanische Verbindung durch mindestens eine der ersten und der zweiten Verbindungseinrichtung, die entfernbar sind, umgesetzt wird, **dadurch gekennzeichnet, dass** das Verbindungsstück (20, 100) einen eiförmigen Querschnitt aufweist.

2. Vorrichtung (2, 86) nach Anspruch 1, wobei die erste Zufuhreinrichtung einen Kanal (60), eine Förderschnecke (70), die in dem Kanal (60) enthalten ist, und einen Aktuator (64), der in der Lage ist, das Schwenken der Förderschnecke (70) zu bewirken.

3. Vorrichtung (2, 86) nach Anspruch 1 oder 2, umfassend eine Heizeinrichtung (34, 59) für eine Außenwand des Verbindungsstücks (20, 100) und/oder der Injektionseinrichtung (50).

4. Vorrichtung (2, 86) nach einem der Ansprüche 1 bis 3, wobei die Injektionseinrichtung eine Düse (50), die eine Einlassöffnung (42), eine Auslassöffnung (44), einen Krümmer (52), einen ersten Abschnitt (54), der sich zwischen der Einlassöffnung (42) und dem Krümmer (52) erstreckt, und einen zweiten Abschnitt (56), der sich zwischen dem Krümmer (52) und der Auslassöffnung (44) erstreckt, umfasst, wobei der erste Abschnitt (54) eine Rotationsform um eine erste Achse (40) parallel zu einer Längsachse des Verbindungsstücks (20, 100) aufweist, wobei der zweite Abschnitt (56) eine Rotationsform um eine zweite Achse (58) aufweist, wobei die zweite Achse (58) vorzugsweise mit der ersten Achse (54) einen Winkel ($\alpha$) zwischen 80° und 170° bildet.

5. Vorrichtung (2, 86) nach Anspruch 3 oder 4, umfassend eine Betätigungseinrichtung (72), die in der Lage ist, die Injektionseinrichtung (22, 50, 102) bezüglich der ersten Zufuhreinrichtung (60) um eine Richtung ($\vec{w}$) parallel zu einer Längsachse der Kupplung (20) drehend anzutreiben, wobei die Betätigungseinrichtung (72) vorzugsweise in der Lage ist, die Kupplung (20, 100) bezüglich der ersten Zufuhreinrichtung (60) drehend anzutreiben.

6. Vorrichtung (2, 86) nach einem der Ansprüche 1 bis 5, umfassend einen Zirkulationskreislauf (85) und eine Aufbereitungsvorrichtung (84), wobei der Zirkulationskreislauf (85) die Aufbereitungsvorrichtung (84) und den Tank (74) fluidisch verbindet.

7. Vorrichtung (86) nach einem der Ansprüche 1 bis 6, umfassend eine zweite Zufuhreinrichtung (110), die in der Lage ist, die Injektionseinrichtung (22, 50, 102) mit einem zweiten Injektionsmaterial zu versorgen, wobei das Verbindungsstück (100) einen inneren Durchgang (105) und einen äußeren Durchgang (106) umfasst, wobei die Injektionseinrichtung (22, 50, 102) einen Raum (107) begrenzt, der in Fluidverbindung mit dem inneren Durchgang (105) und dem äußeren Durchgang (106) steht, wobei der Raum (107) vorzugsweise eine Wand (108) enthält, die ein Helikoid bildet.

8. Vorrichtung (86) nach Anspruch 7, wobei die zweite Zufuhreinrichtung (110) eine erste Verbindungszone (114) und eine zweite Verbindungszone (112) umfasst, wobei die erste Verbindungseinrichtung in der Lage ist, die erste Verbindungszone (114) mechanisch mit dem ersten Ende (26) zu verbinden, wobei die Vorrichtung (86) eine dritte Verbindungseinrichtung umfasst, die in der Lage ist, die erste Zufuhreinrichtung (60) mit der zweiten Verbindungszone (112) mechanisch zu verbinden, wobei die mechanischen Verbindungen durch die erste und die dritte Verbindungseinrichtung, die entfernbar sind, realisiert werden, wobei die zweite Zufuhreinrichtung (110) einen Kanal (116) umfasst, der sich von der ersten Verbindungszone (114) aus erstreckt.

9. Vorrichtung (86) nach einem der Ansprüche 1 bis 8, wobei das erste Injektionsmaterial Beton umfasst.

10. Dreidimensionales Druckverfahren unter Verwendung der Vorrichtung (2, 86) nach einem der Ansprüche 1 bis 9, wobei der Tank (74) mit einem Gel gefüllt wird, dann die erste Zufuhreinrichtung (60) die Injektionseinrichtung (22, 50, 102) mit einem ersten Injektionsmaterial versorgt und ein Produkt (3) durch Abgabe des ersten Injektionsmaterials in das Gel gebildet wird.

**Claims**

1. A device (2, 86) comprising a tray (74) filled with gel, a robotic arm (8), injection means (22, 50, 102), the robotic arm (8) being capable of modifying the position and/or the orientation of the injection means (22, 50, 102) relative to the tray (74), the device (2, 86) including first supply means (60) comprising an oblong connector (20, 100) having a first end (26) and a second end (24), first connecting means mechanically connecting the first end (26) with the first supply means (60) and second connecting means mechanically connecting the second end (24) with the injection means (22, 50, 102), the mechanical connection, which is implemented by at least one of the first and second connecting means, being removable, **characterised in that** the connector (20, 100) has a cross section forming an ovoid.

2. The device (2, 86) according to claim 1, wherein the first supply means comprises a conduit (60), a worm screw (70) contained in the conduit (60) and an actuator (64) capable of causing the worm screw (70) to pivot.

3. The device (2, 86) according to claim 1 or 2, comprising means (34, 59) for heating an outer wall of the connector (20, 100) and/or the injection means (50).

4. The device (2, 86) according to any one of claims 1 to 3, wherein the injection means comprises a nozzle (50) including an inlet orifice (42), an outlet orifice (44), a bend (52), a first portion (54) extending between the inlet orifice (42) and the bend (52) and a second portion (56) extending between the bend (52) and the outlet orifice (44), the first portion (54) having a shape of revolution about a first axis (40) which is parallel to a longitudinal axis of the connector (20, 100), the second portion (56) having a shape of revolution about a second axis (58), the second axis (58) preferably forming an angle (α) comprised between 80° and 170° with the first axis (54).

5. The device (2, 86) according to claim 3 or 4, comprising an actuation means (72) capable of driving in rotation the injection means (22, 50, 102) relative to the first supply means (60) about a direction ($\overrightarrow{W}$) parallel to a longitudinal axis of the connector (20), the actuation means (72) preferably being capable of driving in rotation the connector (20, 100) relative to the first supply means (60).

6. The device (2, 86) according to any one of claims 1 to 5, comprising a circulation circuit (85) and a treatment device (84), the circulation circuit (85) fluidically connecting the treatment device (84) and the tray (74).

7. The device (86) according to any one of claims 1 to 6, comprising second supply means (110) capable of supplying the injection means (22, 50, 102) with a second injection material, the connector (100) comprising an inner passage (105) and an outer passage (106), the injection means (22, 50, 102) delimiting a space (107) in fluid communication with the inner passage (105) and the outer passage (106), the space (107) preferably containing a wall (108) forming a helicoid.

8. The device (86) according to claim 7, wherein the second supply means (110) comprises a first connecting area (114) and a second connecting area (112), the first connecting means being capable of mechanically connecting the first connecting area (114) with the first end (26), the device (86) comprising a third connecting means capable of mechanically connecting the first supply means (60) with the second connecting area (112), the mechanical connections implemented by the first and third connecting means being removable, the second supply means (110) comprising a channel (116) extending from the first connecting area (114).

9. The device (86) according to any one of claims 1 to 8, wherein the first injection material comprises concrete.

10. A method for three-dimensional printing by means of the device (2, 86) according to any one of claims 1 to 9, wherein the tray (74) is filled with a gel, then the first supply means (60) supplies the injection means (22, 50, 102) with a first injection material, and a product (3) is formed by dispensing the first injection material into the gel.

FIG.1

## FIG.2

## FIG.3

## FIG.4

FIG.5A

FIG.5B

EP 3 616 865 B1

## FIG.6

EP 3 616 865 B1

# FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018057682 A